(19) Europäisches Patentamt
European Patent Office
Office européen des brevets

(11) **EP 3 274 652 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(21) Anmeldenummer: **16727406.7**

(22) Anmeldetag: **30.05.2016**

(51) Int Cl.:
***G01B 11/25*** *(2006.01)*

(86) Internationale Anmeldenummer:
**PCT/EP2016/062100**

(87) Internationale Veröffentlichungsnummer:
**WO 2016/202562 (22.12.2016 Gazette 2016/51)**

(54) **STREIFENPROJEKTIONSVERFAHREN, STREIFENPROJEKTIONSVORRICHTUNG UND COMPUTERPROGRAMMPRODUKT**

FRINGE PROJECTION METHOD, FRINGE PROJECTION DEVICE, AND COMPUTER PROGRAM PRODUCT

PROCEDE DE PROJECTION DE FRANGES, DISPOSITIF DE PROJECTION DE FRANGES ET PROGRAMME INFORMATIQUE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2015 DE 102015109721**

(43) Veröffentlichungstag der Anmeldung:
**31.01.2018 Patentblatt 2018/05**

(73) Patentinhaber: **HP Deutschland GmbH**
**71034 Boeblingen (DE)**

(72) Erfinder:
• **WINKELBACH, Simon**
**38116 Braunschweig (DE)**
• **RILK, Markus**
**38102 Braunschweig (DE)**

• **MOLKENSTRUCK, Sven**
**34130 Kassel (DE)**

(74) Vertreter: **Samson & Partner Patentanwälte mbB**
**Widenmayerstraße 6**
**80538 München (DE)**

(56) Entgegenhaltungen:
CN-B- 102 322 823    CN-B- 102 519 390
US-A1- 2012 176 478    US-A1- 2015 070 473

• **YAJUN WANG AND SONG ZHANG: "Novel phase-coding method for absolute phase retrieval", OPTICS LETTERS, OPTICAL SOCIETY OF AMERICA, US, Bd. 37, Nr. 11, 1. Juni 2012 (2012-06-01), Seiten 2067-2069, XP001575897, ISSN: 0146-9592, DOI: 10.1364/OL.37.002067 [gefunden am 2012-05-30]**

**EP 3 274 652 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Streifenprojektionsverfahren zum Bestimmen der Topographie eines Körpers, mit den Schritten (a) Projizieren einer Folge von Sätzen von Mustern auf die Oberfläche eines Körpers, wobei jeder Satz zumindest zwei Muster aufweist und wobei jedes Muster S Streifen hat, (b) für jedes Muster Aufnehmen eines Bildes der Oberfläche mit aufprojiziertem Muster, sodass eine Folge von Bildern entsteht, und (c) berechnen der Topographie aus den Bildern.

Gemäß einem zweiten Aspekt betrifft die Erfindung eine Streifenprojektionsvorrichtung zum Bestimmen der Topographie eines Körpers, mit (i) einem Projektor zum Projizieren einer Folge von Sätzen von Mustern auf die Oberfläche des Körpers, (ii) einer Kamera zum Aufnehmen eines Bildes der Oberfläche mit aufprojiziertem Muster und (iii) einer Steuervorrichtung, die mit dem Projektor und der Kamera verbunden ist. Gemäß einem dritten Aspekt betrifft die Erfindung ein Computerprogrammprodukt.

Um die Topographie eines Körpers zu vermessen, werden beispielsweise aktive Triangulationsverfahren verwendet. Dabei werden mit einem Projektor nacheinander mehrere Lichtmuster auf die Oberfläche des zu vermessenden Körpers projiziert und Bilder der mit dem Muster beleuchteten Oberfläche mit einer Kamera aufgenommen, die meist seitlich versetzt zum Projektor angeordnet ist. All diese Verfahren haben gemeinsam, dass die Sehstrahlen der Kamera mit dem jeweils korrespondierenden Beleuchtungsstrahl oder der jeweils korrespondierenden Beleuchtungsebene des Projektors geometrisch geschnitten werden. Die Bestimmung der Korrespondenz zwischen Kamerapixel und Projektorpixel oder Projektionslinie wird Korrespondenzproblem genannt.

Um das Korrespondenzproblem zu lösen, wurde eine Vielzahl von Projektionsmustern vorgeschlagen. Bekannt ist beispielsweise, den Körper mit einer Folge von Streifenmustern zu bestrahlen, wobei die Streifen in einem zeitlich aufeinander folgendem Muster einem Gray-Code folgen. Vorteilhaft daran ist, dass die Berechnung von Punkten der Oberfläche des Körpers für solche Kamerapixel robuster ist, bei deren Helligkeitswert nicht eindeutig zu entscheiden ist, ob der zugeordnete Punkt auf der Oberfläche des Körpers beleuchtet wurde oder nicht.

Nachteilig an einem derartigen Streifenprojektionsverfahren ist, dass reflektierende, beispielsweise glänzende, Oberflächen nur sehr schlecht vermessen werden können. Besonders wenig verlässlich ist ein derartiges Streifenprojektionsverfahren für Körper, deren Oberflächen so geformt sind, dass es zu Mehrfachreflexionen kommen kann.

Auf der US 2011 008 471 A1 ist ein Verfahren bekannt, bei dem einerseits eine Streifenprojektion auf Basis des Gray-Codes und andererseits eine Projektion mit einer sinusförmigen Intensitätsverteilung verwendet wird. Die Daten, die durch die beiden unterschiedlichen Projektionen gewonnen werden, werden gemeinsam verwendet, um die Gestalt des Probekörpers zu berechnen. Nachteilig an einem derartigen Verfahren ist die vergleichsweise hohe Messzeit, da zwei unterschiedliche Sätze an Streifenmustern projiziert werden müssen.

Aus der DE 11 2008 002 148 T5 ist ein Verfahren bekannt, was einerseits ein streifenförmiges Lichtmuster, das zum räumlichen Codieren verwendet wird, und ein streifenförmiges Lichtmuster, das für ein Phasenverschiebungsverfahren verwendet wird, einsetzt. Bei diesem Verfahren müssen zwei getrennte Sätze von sich ändernden Mustern auf das Objekt projiziert werden.

Aus der US 6,930,704 B1 ist ein Verfahren bekannt, bei dem ein Streifenmuster aufprojiziert wird, wobei die Intensitätsverteilung in jedem der Streifen eine Amplitudenmodulation aufweisen kann. Eine Phasencodierung wird nicht verwendet.

In dem Artikel von Sansoni et al "3D Imager for Dimensional Gauging of Industrial Workpieces: State of the Art of the Development of a Robust and Versatile System"; Proceedings of International Conference on Recent Advances in 3-D Digital Imaging and Modeling, 1997, S. 19 - 26, wird ebenfalls das Gray-Code-Projektionsverfahren mit dem Phasen-Verschiebungs-Verfahren kombiniert, wobei auch bei diesem Verfahren jeweils zwei Sätze von Mustern projiziert werden müssen.

Der gleiche Ansatz findet sich in dem Paper von Sansoni et al: Three-dimensional vision based on a combination of gray-code and phase-shift light projection: analysis and compensation of the systematic errors"; Applied Optics Vol 38, No. 31, 1999, S. 6565 - 6573.

WANG et al, "Novel phase-coding method for absolute phase retrieval", OPTICS LETTERS, Optical Society of America, US, Bd. 37, Nr. 11, 1. Juni 2012, beschreibt ein Projektionsverfahren, bei dem ein Codewort in Gestalt einer treppenstufenförmigen Phasenfunktion codiert wird. CN 102322823(A) beschreibt ein selbstkodierendes dreidimensionales Messverfahren auf der Basis von Phasengradienten.

Die bekannten Verfahren haben den Nachteil, dass sie wenig robust gegenüber diffusen und/oder unscharfen Mehrfachreflexionen sind.

Der Erfindung liegt die Aufgabe zu Grunde, ein verbessertes Streifenprojektionsverfahren vorzuschlagen.

Die Erfindung löst das Problem durch ein gattungsgemäßes Streifenprojektionsverfahren gemäß Anspruch 1, bei dem jeder Streifen einen Intensitätsverlauf senkrecht zur Streifen-Längsrichtung aufweist und jeder Intensitätsverlauf durch eine Funktion beschreibbar ist, die eine räumliche Phasenlage hat, die von der Ordinalzahl des Streifens abhängt.

Gemäß einem zweiten Aspekt löst die Erfindung das Problem durch eine gattungsgemäße Streifenprojektionsvorrichtung gemäß Anspruch 7, deren Steuervorrichtung eingerichtet ist zur automatischen Durchführung eines erfindungsgemäßen Verfahrens.

Gemäß einem dritten Aspekt löst die Erfindung das Problem durch ein Computerprogrammprodukt gemäß Anspruch 8. Vorteilhaft an der Erfindung ist, dass durch den mit der Ordinalzahl sich verändernden Intensitätsverlauf aus der Lichtintensität, die mit einem Kamerapixel aufgenommen wird, mit hoher Genauigkeit auf den Ort geschlossen werden kann, den das Kamerapixel aufnimmt. Kommt es zu Reflexionen, so ist der Anteil von reflektiertem Licht an der Amplitude, der über die Bildfolge variierenden Gesamtintensität des Lichts, das mit einem vorgegebenen Kamerapixel aufgenommen wird, klein im Vergleich zu dem Beitrag desjenigen Lichts, das nicht mehrfach reflektiert wird. Die Erfindung erlaubt es daher, auch reflektierende, insbesondere glänzende Körper zu vermessen.

Vorteilhaft ist zudem, dass die räumliche Auflösung nicht durch die Streifenbreite des schmalsten Streifens begrenzt wird.

Ein weiterer Vorteil ist die erhöhte Robustheit gegenüber diffusen oder unscharfen Reflexionen. Bei solchen Reflexionen kommt es bei der Übertragung von einer Oberfläche zu der anderen zu einer Tiefpassfilterung des Mustersignals. Das heißt niederfrequente Muster werden übertragen, aber hochfrequente Muster abgeschwächt. Dadurch verursachen hochfrequente Muster weniger Störungen. In der Erfindung wird gegenüber einem herkömmlichen Streifenprojektionsverfahren auf Basis des Gray-Codes ein zusätzliches hochfrequentes Muster aufprojiziert, was zu der verbesserten Robustheit führt.

Im Rahmen der vorliegenden Beschreibung umfasst die Topographie die dreidimensionalen Koordinaten der Oberfläche des Körpers und das Reflexionsverhalten.

Unter der Streifen-Längsrichtung wird diejenige Richtung verstanden, in die der Streifen verläuft. In anderen Worten ist die Streifen-Längsrichtung diejenige Richtung, entlang der man dem Streifen folgen kann, ohne dass sich die Intensität verändert. In der weiteren Beschreibung wird diese Richtung als y-Richtung betrachtet.

Unter dem Intensitätsverlauf wird insbesondere eine Abbildung verstanden, die der Position senkrecht zur Streifen-Längsrichtung die Lichtintensität zuordnen. Die Position senkrecht zur Streifen-Längsrichtung ist die x-Richtung.

Unter dem Muster wird die Gesamtheit von anderen angrenzenden Streifen verstanden.

Unter der Phasenlage wird derjenige Term im Argument der Funktion, die den Intensitätsverlauf beschreibt, verstanden, der nicht von der Koordinate abhängt. Unter der Phase wird das gesamte Argument dieser Funktion verstanden.

Es ist vorteilhaft, wenn die räumliche Wellenlänge mindestens so groß ist wie die Streifenbreite der Streifen.

Unter dem Merkmal, dass die Phasenlage von der Ordinalzahl des Streifens abhängt, wird insbesondere verstanden, dass eine Funktion existiert, die jeder Ordinalzahl eine Phasenlage zuordnet.

Unter einem Projizieren wird insbesondere das Aussenden von Licht verstanden, das so erfolgt, dass aus dem reflektierten Licht die Topographie des Körpers bestimmt werden kann. Es ist möglich, nicht aber notwendig, dass zum Projizieren lichtbündelnde Bauteile verwendet werden. Das erlaubt scharfe Musterprojektionen auf matten Oberflächen. Es ist aber beispielsweise auch möglich, dass das Projizieren der Folge von Sätzen von Mustern mittels eines Bildschirms erfolgt.

Die Funktion ist periodisch und die Intensitätsverläufe der Muster eines Satzes haben die gleiche räumliche Frequenz. Das erleichtert die Auswertung.

Die Phasenlage hängt von einem Code der Ordinalzahl des Streifens ab, und zwar von jeweils nur einer einzigen Stelle eines Codeworts der Ordinalzahl. Auf diese Weise kann die Topographie mit vergleichsweise kleinem Rechenaufwand berechnet werden. Unter dem Code wird nicht der triviale Code verstanden, der jeder Zahl genau die gleiche Zahl zuordnet.

Vorzugsweise hat der Code einen Hamming-Abstand von 1. Das erhöht die Robustheit des Streifenprojektionsverfahrens. Besonders günstig ist es, wenn der Code ein N-ärer Gray-Code ist, wobei das Code-Alphabet aus N Symbolen besteht. In diesem Fall ist die Phasenlage eine Funktion des Gray-Codes der Ordinalzahl des Streifens. Vorzugsweise ist der Gray-Code ein binärer, ternärer, quaternärer, quinärer, senärer, septenärer oder oktaler Gray-Code.

Vorzugsweise unterscheiden sich die Phasenlagen aller K-Muster innerhalb eines Satzes voneinander. Es ist dann möglich, aus den Phasenlagen eindeutig auf den Streifen zu schließen und daraus die 3D-Koordinate des beleuchteten Punktes des Objektes zu berechnen.

Vorzugsweise unterscheiden sich zumindest zwei Muster des gleichen Satzes in ihrer Farbe. Es ist dann möglich, zwei, drei oder mehr Muster gleichzeitig auf den Körper zu projizieren und die einzelnen Farben getrennt voneinander auszuwerten. So wird die Messzeit deutlich verringert. Wenn eine besonders hohe räumliche Auflösung erwünscht ist, ist es jedoch meistens vorteilhaft, ein monochromes bzw. graues Muster auf die Oberfläche des Körpers zu projizieren und die Bilder der Oberfläche mit einer monochromen Kamera aufzunehmen. Diese besitzen in der Regel chipbedingt eine höhere räumliche Auflösung und Lichtempfindlichkeit.

Günstig ist es, wenn die Phasenlage im s-ten Streifen des k-ten Musters im m-ten Satz die Summe enthält aus einem ersten Term, der s enthält, nicht aber k, und einem zweiten Term, der k enthält, nicht aber s oder m. Auf diese Weise kann durch Vergleich der aufgenommenen Bilder für unterschiedliche Muster und/oder unterschiedliche Sätze bei gleichbleibendem Punkt auf dem Körper eindeutig auf die Position des Projektorpixels und damit auf die Position des Punktes der Oberfläche des Körpers geschlossen werden.

Besonders günstig ist es, wenn die Phase für den s-ten Streifen des k-ten Musters im m-ten Satz den Term $360°Sx / X+k\varphi + g_{s,m}\delta$ enthält. Anhand dieses Terms ist die Bestimmung der x-Koordinate des Lichtstrahls bzw. der Lichtebene aus der gemessenen Lichtintensität leicht möglich.

Besonders günstig ist es, wenn die Intensität Q am Ort x für den s-ten Streifen des k-ten Musters im m-ten Satz gegeben ist durch:

$Q_{k,s,m}(x) = a \cdot p[360°Sx / X + k\varphi + g_{s,m} \delta] + bx + c$. Dabei ist p vorzugsweise eine in 360° periodische, insbesondere eine trigonometrische Funktion. a, b und c sind reellwertige Konstanten.

Günstig ist es, wenn für den Phasenversatzparameter $|\delta| \leq 360°(N-1)$ gilt, wobei $N = \#A$ und $A = \{0,1,...,N-1\}$ das Alphabet des Codes ist. Vorzugsweise gilt für den Phasenversatzparameter $|\delta| = 360°/N$.

Gemäß einer bevorzugten Ausführungsform umfasst das Verfahren die Schritte

(a) Berechnen der Lage einer Lichtebene aus den Lichtintensitäten, die mit einem Pixel der Kamera für die Muster an der gleichen Stelle gemessen werden und

(b) Berechnen der 3D-Koordinaten dieser Stelle durch Triangulation aus der Lichtebene und dem Sehstrahl, der zu dieser Stelle führt. Diese Schritte werden für mehrere, insbesondere für alle Pixel der Kamera durchgeführt.

Im Folgenden wird die Erfindung anhand der beigefügten Zeichnungen näher erläutert. Dabei zeigt

Figur 1     eine schematische Ansicht einer erfindungsgemäßen Streifenprojektionsvorrichtung zum Durchführen eines erfindungsgemäßen Verfahrens,

Figur 2     ein Diagramm zur Erläuterung einer Ausführungsform eines erfindungsgemäßen Verfahrens,

Figur 3     eine Folge von Mustern, die gemäß einer Ausführungsform projiziert wurden, und

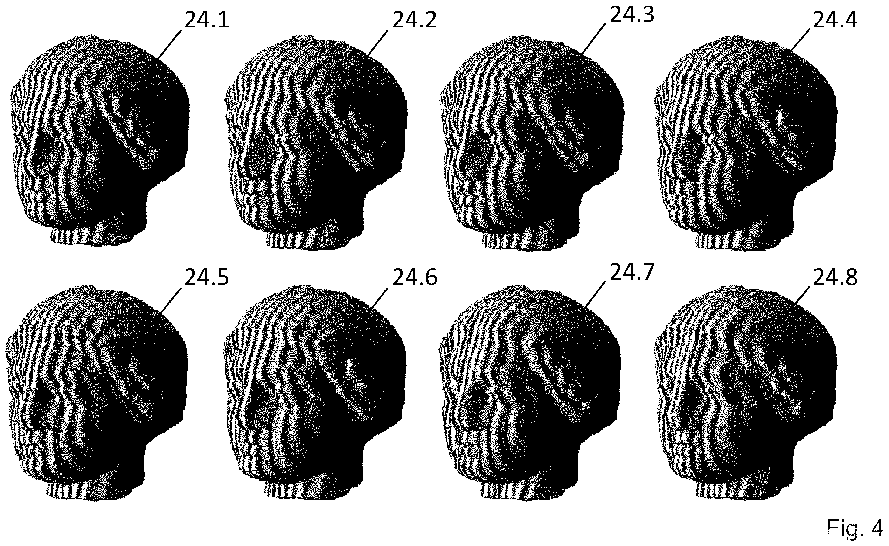

Figur 4     eine exemplarische Folge von Kamerabildern, die bei Projektion der Muster aus Figur 3 entstehen.

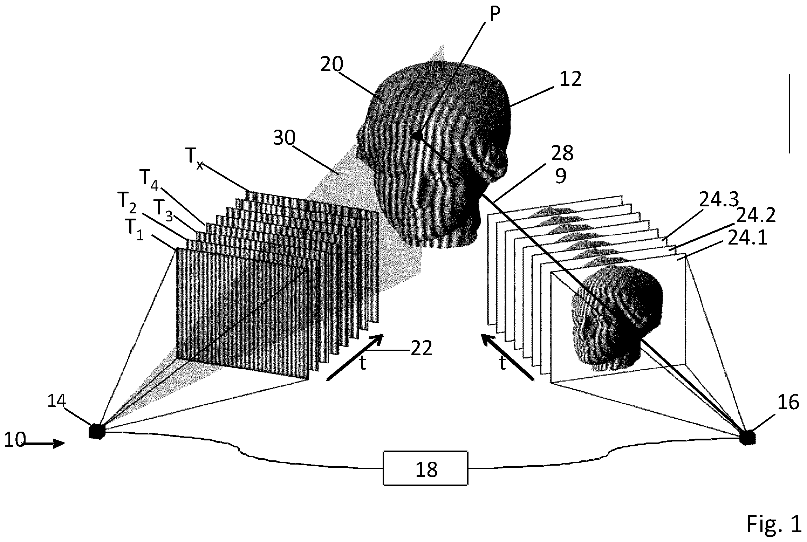

Figur 1 zeigt eine erfindungsgemäße Streifenprojektionsvorrichtung 10 zum Bestimmen der Topographie eines Körpers 12, die einen Projektor 14, eine Kamera 16 und eine Steuervorrichtung 18 aufweist. Der Projektor 14 ist ausgebildet zum Projizieren einer Folge von Sätzen von Mustern $T_{1'}$, $T_2$,... auf eine Oberfläche 20 des Körpers 12. Die aufeinander folgenden Muster sind gemeinsam eingezeichnet, ein Zeitstrahl 22 soll andeuten, dass die einzelnen Muster zeitlich nacheinander projiziert werden. Es sei angemerkt, dass es allerdings auch möglich ist, zwei oder mehr Muster gleichzeitig zu projizieren, wenn sich die Muster in ihren Farben unterscheiden.

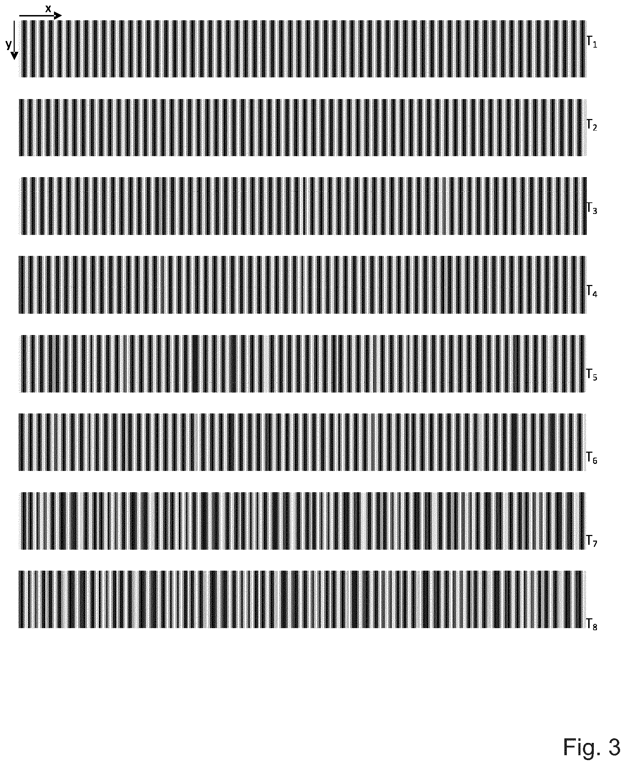

Durch die auf die Oberfläche 20 projizierten Muster $T_i$ bildet sich auf der Oberfläche 20 ein Hell-Dunkel-Muster. Die Kamera 16 nimmt für jedes Muster ein Bild 24 auf. So nimmt sie zum ersten Muster $T_1$ das Bild 24.1 auf, zum zweiten Muster $T_2$ das Bild 24.2, und ganz allgemein zum i-ten Muster das Bild 24.i. In Figur 3 sind die Bilder 24.1 bis 24.8 für eine für eine mögliche Ausführungsform des erfindungsgemäßen Verfahrens gezeigt.

Zur Berechnung der Topographie des Körpers 12, insbesondere also der dreidimensionalen Koordinaten der Oberfläche 20 in einem vorgegebenen Koordinatensystem, wird für jeden Detektionspunkt der Kamera 16 ein gedachter Sehstrahl 28 konstruiert und mit einer Lichtebene 30 geschnitten. Anhand der Koordinaten von Projektor 14 und Kamera 16 sowie den Winkeln, unter denen der Sehstrahl 28 und die Lichtebene 30 verlaufen, werden die Koordinaten desjenigen Punkts P auf der Oberfläche 20 bestimmt, der von der Lichtebene 30 getroffen und vom Sehstrahl 28 erfasst wurde. Diese Berechnung ist seit langem bekannt. Die Herausforderung ist es, aus der Folge an Lichtintensitäten $\overline{Q}_{k,m}$ für ein vorgegebenes Kamerapixel darauf zu schließen, welche Lichtebene 30 auf den Punkt P aufgetroffen ist.

Die vorliegende Beschreibung bezieht sich auf ein Streifenprojektionsverfahren, bei dem eine Folge von Sätzen von Mustern auf die Oberfläche 20 projiziert wird, die eine besonders genaue Bestimmung der Koordinaten der Punkte der Oberfläche 20 erlaubt. Zudem ist die im erfindungsgemäßen Verfahren verwendete Folge von Sätzen von Mustern besonders gut dazu geeignet, Körper 12 mit glänzenden Oberflächen zu vermessen.

Die Figuren 1, 2 und 3 zeigen, dass die Muster $T_i$ jeweils eine konstante Anzahl von S-Streifen haben.

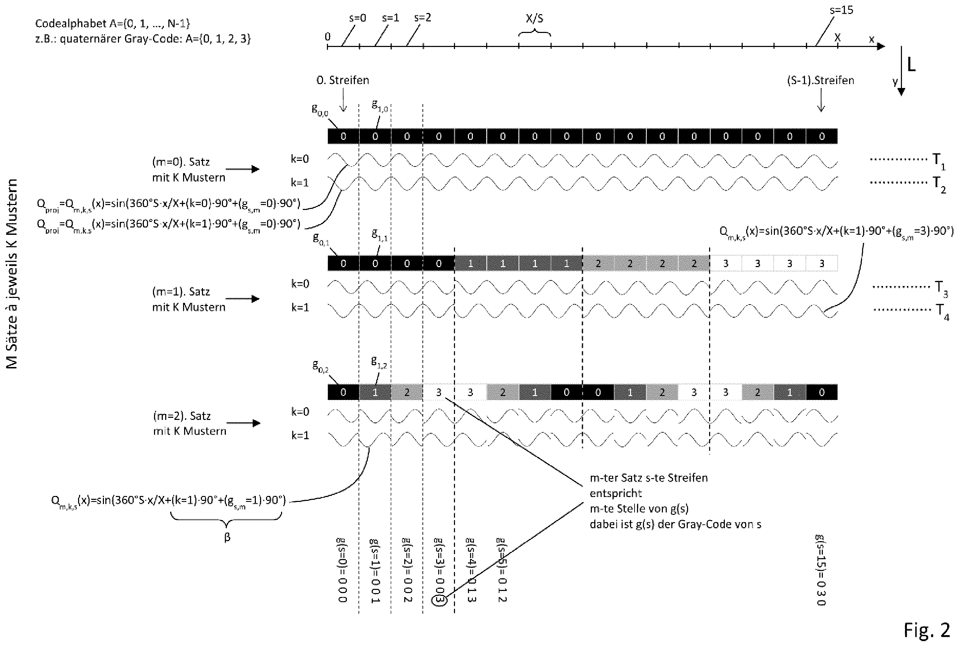

Figur 2 zeigt ein Schema für die Folge von Sätzen von Mustern für ein erfindungsgemäßes Streifenprojektionsverfahren. Ganz oben ist die unabhängige Koordinate x eingezeichnet. Die zur x-Richtung senkrechte y-Richtung wird als Streifen-Längsrichtung L bezeichnet. Die Helligkeit entlang der Streifen-Längsrichtung L ist für jeden Streifen eines Musters $T_i$ im technischen Sinne konstant. Das heißt, dass die projizierte Lichtintensität $Q_{proj}$ zwar schwanken kann, dass diese Schwankungen aber so klein sind, dass sie für die Auswertung vernachlässigt werden können.

In Figur 2 ist schematisch eine Folge von Sätzen von Mustern $T_i$ für S= 16 Streifen gezeigt. Der Zählindex s der Streifen beginnt mit 0, das heißt, dass die Streifen durchnummeriert sind mit s= 0, s= 1, ..., s= 15. In Koordinaten erstrecken sich die Streifen im Intervall [0, X], das heißt der kleinste x-Wert ist definitionsgemäß 0, der größte x-Wert ist X.

Nach unten sind die Intensitätsverläufe $Q_{proj}$ für die zeitlich aufeinanderfolgenden Muster $T_1$, $T_2$, ...eingezeichnet. Im vorliegendem Fall gilt $Q_{proj}=Q_{m,k,s}$ = sin (360°Sx/X + kφ + $g_{s,m}$ δ), wobei δ= 360°/N gilt. N ist die Anzahl der Symbole im Alphabet des verwendeten Gray-Codes. Damit ergibt sich die Intensitätsverteilung für das Muster $T_1$ zu $Q_{proj,1}$ = sin (360°Sx/X). Das erste Muster $T_1$ ist Teil des ersten Satzes, also m= 0, und des ersten Musters, daher k= 0.

Da jeder Satz K Muster besitzt, die zueinander um φ phasenverschoben sind, kann ein K-dimensionaler Inten-sitätsvektor $\vec{Q}_m$ definiert werden, dessen Komponenten die Intensitäten der Muster innerhalb eines Satzes sind. Aus dem Intensitätsvektor $\vec{Q}_m$ kann ein zweidimensionaler Phasenvektor $\vec{\Psi}_m$ berechnet werden.

Es ist zu erkennen, dass beide Muster im ersten Satz im vorliegenden Fall so gewählt sind, dass sie an den Grenzen, an denen zwei Streifen aneinander angrenzen, stetig ineinander übergehen.

Im zweiten Satz existieren in Figur 2 vier voneinander getrennte Abschnitte mit jeweils vier Streifen, wobei die Intensitätsverläufe an den Grenzen zwischen den vier Abschnitten unstetig sind. Im dritten Satz sind die Intensitätsverläufe an allen Grenzen zwischen benachbarten Streifen unstetig, nicht jedoch an denjenigen Grenzen, an denen in den vorherigen Mustersätzen bereits Unstetigkeiten vorgekommen sind.

Auf Basis der beschriebenen Folge von Sätzen von Mustern wird aus den von der Kamera 16 (vgl. Figur 1) aufgenommenen Bildpunkten auf die im Folgenden beschriebene Weise die Topographie des Körpers berechnet.

Beim 0.ten Mustersatz, also m=0, ist die Phasenlage nicht abhängig von der Ordinalzahl s des Streifens. Dies kann dadurch erreicht werden, dass für die 0te Stelle des Gray-Codewortes g(s) von S immer der Wert 0 gewählt wird, also $g_{s,0}$=0 für alle s ∈ {0,1, ..., s-1}.

Dies entspricht einer Erweiterung des Gray-Codes um eine zusätzliche 0.te Stelle, das heißt für S=16 Streifen werden 3-stellige Codewörter verwendet, obwohl für die Codierung von 16 Streifen, mit einem 4-ären Gray-Code, 2 Stellen ausreichen würden.

## Berechnung der Topographie aus den Messdaten

Der Intensitätsverlauf des k-ten Musters im m-ten Satz sei wie vorher beschrieben $Q_{k,s,m}(x) = a \cdot \sin(360° \cdot S \cdot x/X + k \cdot φ + g_{s,m} \cdot \delta) + c$ mit der Phasenlage

$$\beta = k \cdot φ + g_{s,m} \cdot \delta.$$

Die Muster werden auf einen Körper projiziert, von diesem reflektiert und von einer Kamera aufgenommen. Die Intensitäten $\bar{Q}_{k,m}$ die bei jeweils einem Kamerapixel ankommen entsprechen

$$\bar{Q}_{k,m} = \bar{a} \cdot \sin\left(360° \cdot S \cdot x/X + k \cdot φ + g_{s,m} \cdot \delta\right).$$

Dabei bezeichnet x weiterhin die x-Koordinate des Musters, die für die aufgenommene Intensität des Kamerapixels verantwortlich ist. Der Wert von x ist demnach konstant aber unbekannt (Korrespondenzproblem). Das s bezeichnet weiterhin die Ordinalzahl des Streifens und ist ebenfalls konstant aber unbekannt.

Der Projektorstreifen s und die x-Koordinate müssen berechnet werden, um das Korrespondenzproblem zu lösen und eine Triangulation durchführen zu können. Außerdem unbekannt ist die Amplitude $\bar{a}$, die im Kamerapixel ankommt, da sie von den Reflexionseigenschaften des Körpers beeinflusst wird.

Der Offset c, bzw. der Offset $\bar{c}$ in den Intensitäten $\bar{Q}_{k,m}$ des Kamerapixels wird durch eine übliche Vorverarbeitung (z.B. durch Differenzbildung mit anderen projizierten Mustern) eliminiert. Bekannt sind also S,X,k,φ,m,δ sowie die verwendete Codierung von $g_{s,m}$. Gesucht ist zunächst s und dann x.

Weiterhin sei angenommen, dass der 0. Mustersatz (m=0 bzw. das Referenzsignal) keine Phasenverschiebung enthält, also für alle s ∈ {0, 1, ...,S - 1} gilt $g_{s,0}$ = 0. Bei Projektion des 0-ten Mustersatzes sind die Intensitäten des Kamerapixels also

$$\bar{Q}_{k,0} = \bar{a} \cdot \sin\left(360° \cdot S \cdot x/X + k \cdot φ\right).$$

Für die Berechnung von s und x fassen wir zuerst alle in einem Kamerapixel aufgenommenen Intensitäten mit $k \in \{0, 1, ..., K - 1\}$ jeweils eines Mustersatzes zu einem Intensitätsvektor $\vec{Q}_m$ zusammen

$$\vec{Q}_m = \begin{pmatrix} \bar{Q}_{0,m} \\ \bar{Q}_{0,m} \\ \vdots \\ \bar{Q}_{K-1,m} \end{pmatrix} = \begin{pmatrix} \bar{a} \cdot \sin\left(360° \cdot S \cdot x/X + \quad 0 \quad \cdot \varphi + g_{s,m} \cdot \delta\right) \\ \bar{a} \cdot \sin\left(360° \cdot S \cdot x/X + \quad 1 \quad \cdot \varphi + g_{s,m} \cdot \delta\right) \\ \vdots \\ \bar{a} \cdot \sin\left(360° \cdot S \cdot x/X + (K-1) \cdot \varphi + g_{s,m} \cdot \delta\right) \end{pmatrix} \tag{1}$$

Nach den Additionstheoremen der Trigonometrie gilt:

$$\sin(\alpha + \beta) = \cos(\alpha)\sin(\beta) + \sin(\alpha)\cos(\beta) = (\cos(\alpha) \quad \sin(\alpha))\begin{pmatrix} \sin(\beta) \\ \cos(\beta) \end{pmatrix}$$

Durch äquivalente Umformung von

(1) ergibt sich

$$\vec{Q}_m = \underbrace{\begin{pmatrix} \cos(0 \cdot \varphi) & \sin(0 \cdot \varphi) \\ \cos(1 \cdot \varphi) & \sin(1 \cdot \varphi) \\ \vdots & \vdots \\ \cos((K-1) \cdot \varphi) & \sin((K-1) \cdot \varphi) \end{pmatrix}}_{H} \underbrace{\begin{pmatrix} \bar{a} \cdot \sin\left(360° \cdot S \cdot x/X + g_{s,m} \cdot \delta\right) \\ \bar{a} \cdot \cos\left(360° \cdot S \cdot x/X + g_{s,m} \cdot \delta\right) \end{pmatrix}}_{\vec{\Psi}_m}$$

mit bekannter konstanter Matrix $H$ und unbekanntem zweidimensionalen Phasenvektor $\vec{\Psi}_m$.

Im Fall von $K = 2$ und $\varphi = 90°$ wird $H$ zur Einheitsmatrix und es gilt der einfache Zusammenhang

$$\vec{Q}_m = \vec{\Psi}_m$$

Im allgemeinen Fall kann der Phasenvektor $\vec{\Psi}_m$ mit Hilfe der Pseudoinverse (Moore-Penrose-Inverse) $H^+$ berechnet werden:

$$\vec{\Psi}_m = H^+ \cdot \vec{Q}_m$$

Voraussetzung für eine eindeutige Lösung für $\vec{\Psi}_m$ ist, dass der Rang von $H$ größer ist als 1. Dies ist genau dann der Fall, wenn gilt: $K \geq 2$ und $\varphi \bmod 180° \neq 0$.

Für die Berechnung von s gibt es nun zumindest zwei Möglichkeiten.

**Methode A**

Der gerichtete Winkel zwischen dem 0-ten Phasenvektor $\vec{\Psi}_0$ und dem m-ten Phasenvektor $\vec{\Psi}_m$ entspricht dem Phasensprung $g_{s,m} \cdot \delta$:

$$g_{s,m} \cdot \delta \equiv \sphericalangle\left(\vec{\Psi}_0, \vec{\Psi}_m\right) \bmod 360° \tag{2}$$

Die Winkelfunktion $\sphericalangle(\vec{a}, \vec{b})$ beschreibt hierbei den positiven gerichteten Winkel im Zweidimensionalen von Vektor $\vec{a}$ nach Vektor $\vec{b}$ im mathematisch positiven Drehsinn. Dieser Winkel kann z.B. mit Hilfe der bekannten atan2-Funktion berechnet werden:

$$\sphericalangle\left(\begin{pmatrix} a_x \\ a_y \end{pmatrix}, \begin{pmatrix} b_x \\ b_y \end{pmatrix}\right) = \left[atan2(a_x b_y - a_y b_x , a \quad b \quad + a_y b_y) + 360°\right] \bmod 360°$$

Für die Berechnung des gesuchten Projektorstreifens s wird nun derjenige Zahlenwert $s \in \{0,1, ...,S - 1\}$ gewählt, für den die Kongruenzgleichung (2) für alle $m \in \{1, ...,M - 1\}$ erfüllt ist.

**Methode B**

Robuster kann s über eine Maximierung bestimmt werden. Hierfür wird der Intensitätsvektor $\vec{\Psi}_0$ des Referenz-signals so gedreht, dass er bei korrekt gewähltem s in die gleiche Richtung wie $\vec{\Psi}_m$ zeigt und in diesem Fall das Skalarprodukt $\langle \cdot, \cdot \rangle$ maximal wird.

$$s = \arg\max_{\overline{s} \in \{0,...,S-1\}} \sum_{m=1}^{M-1} \langle \begin{pmatrix} \cos(g_{\overline{s},m} \cdot \delta) & -\sin(g_{\overline{s},m} \cdot \delta) \\ \sin(g_{\overline{s},m} \cdot \delta) & \cos(g_{\overline{s},m} \cdot \delta) \end{pmatrix} \vec{\Psi}_0 , \vec{\Psi}_m \rangle$$

Nach Berechnung des Projektorstreifens s kann die x-Koordinate des Musters mit vom Phasenshift-Ansatz bekannten Berechnungsverfahren bestimmt werden. Hierfür reicht es aus den 0-ten Intensitätsvektors zu betrachten. Die Formel

$$x = \left[s + \sphericalangle\left(\begin{pmatrix} 1 \\ 0 \end{pmatrix}, \vec{\Psi}_0\right)/360°\right] \cdot X/S$$

liefert dann die x-Koordinate des projizierten Musters, die von dem Kamerapixel wahrgenommen wird.

Aus der so berechneten x-Koordinate des Projektors und der Koordinate des Kamerapixels, der räumlichen Lage von Kamera 16 und Projektor 10, welche anhand einer Kalibriermessung bestimmt wird, sowie den Abbildungseigenschaften von Kamera 16 und Projektor 10 werden dann auf bekannte Weise mittels Triangulation die Koordinaten von P bestimmt. Dieses Verfahren wird automatisch mittels der Steuervorrichtung 18 für alle Pixel der Kamera 18 durchgeführt und so die Koordinaten von Punkten P der Oberfläche 20 berechnet. Die entstehende Punktwolke beschreibt die Topographie des Körpers 12.

**Bezugszeichenliste**

| | | | | |
|---|---|---|---|---|
| 10 | Streifenprojektionsvorrichtung | | k | Laufindex der Muster im Satz |
| 12 | Körper | | K | Anzahl der Muster pro Satz |
| 14 | Projektor | | L | Streifen-Längsrichtung |
| 16 | Kamera | | m | Laufindex des Satzes |
| 18 | Steuervorrichtung | | M | Anzahl der Sätze |
| 20 | Oberfläche | | N | Anzahl der Symbole des Code-Alphabets |
| 22 | Zeitstrahl | | | |
| 24 | Kamerabild | | p | Funktion |
| 28 | Sehstrahl | | P | Punkt auf Oberfläche |
| 30 | Lichtebene | | $\overline{Q}_{k,m}$ | erfasste Intensität |
| | | | $Q_{proj}$ | projizierte Licht-Intensität |
| β | Phasenlage | | t | Zeit |
| δ | Phasenversatzparameter | | | |
| φ | Differenzwinkel | | s | Laufindex der Streifen |
| a | reelle Zahl | | S | Anzahl der Streifen |

(fortgesetzt)

| | | | | |
|---|---|---|---|---|
| b | reelle Zahl | | T | Muster |
| c | reelle Zahl | | x | Musterkoordinate |
| g | Funktion, die einer Zahl ihren Gray-Code zuordnet | | X | Breite der Muster bzw. größt-mögliche Koordinate |
| $g_{s,m}$ | m-te Stelle des Graykodes von s | | y | Musterkoordinate parallel zum Streifen |

**Patentansprüche**

1. Streifenprojektionsverfahren zum Bestimmen der Topographie eines Körpers (12), mit den Schritten:

   (a) Projizieren einer Folge von Sätzen (m) von Mustern ($T_i$) auf die Oberfläche (20) des Körpers (12), wobei jeder Satz (m) zumindest zwei Muster ($T_i$) aufweist und wobei jedes Muster ($T_i$) S Streifen hat;
   (b) für jedes Muster ($T_i$) Aufnehmen eines Bildes (24.i) der Oberfläche (20) mit aufprojiziertem Muster, sodass eine Folge von Aufnahmen entsteht, und
   (c) Berechnen der Topographie aus den Bildern (24.i),
   (d) wobei solche Muster ($T_i$) projiziert werden, bei denen jeder Streifen einen Intensitätsverlauf senkrecht zur Streifen-Längsrichtung (L) aufweist und jeder Intensitätsverlauf durch eine periodische Funktion (Q) beschreibbar ist, die eine räumliche Phasenlage (ß) hat, wobei alle Intensitätsverläufe die gleiche räumliche Frequenz haben, und
   (e) die Phasenlage (ß) sich in Abhängigkeit von einem Code ($g_{(s)}$) der Ordinalzahl (s) des Streifens ändert, wobei die Phasenlagen (ß) der Streifen der Muster ($T_i$) eines jeweiligen Satzes (m) von jeweils nur einer einzigen Codewortstelle des Codes ($g_{(s)}$) der Ordinalzahl (s) abhängen.

2. Streifenprojektionsverfahren nach Anspruch 1, **dadurch gekennzeichnet, dass** sich die Phasenlagen (ß) für alle k Muster innerhalb eines Satzes voneinander unterscheiden.

3. Streifenprojektionsverfahren nach einem der vorstehenden Ansprüche, **dadurch gekennzeichnet, dass** die Phasenlage (ß) im s-ten Streifen des k-ten Musters im m-ten Satz die Summe enthält aus

   einem ersten Term, der s enthält, nicht aber k enthält, und
   einem zweiten Term, der k enthält, nicht aber s oder m.

4. Streifenprojektionsverfahren nach Anspruch 3, **dadurch gekennzeichnet, dass** die Phase für den s-ten Streifen des k-ten Musters im m-ten Satz den Term $\frac{360°Sx}{X} + k\varphi + g_{s,m}\delta$ , wobei

   S die Gesamtzahl an Streifen ist (s = 0,1,...., S-1),
   x die Koordinate senkrecht zur Streifenlängsrichtung ist,
   X die obere Intervallgrenze der x-Werte ist (x $\in$ {0,....,X}),
   $\varphi$ ein Differenzwinkel ist mit $\varphi$ *mod* 360° $\neq$ 0°,
   $g_{s,m}$ die m-te Stelle des Codes, insbesondere Gray-Codes, g von s ist und
   $\delta$ ein Phasenversatzparameter ist mit $\delta$ *mod* 360° $\neq$ 0°.

5. Streifenprojektionsverfahren nach Anspruch 4, **dadurch gekennzeichnet, dass** die Intensität Q am Ort x für den s-ten Streifen des k-ten Musters im m-ten Satz gegeben ist durch: $Q_{k,s,m}(x)) = a \cdot p\left[\frac{360°S}{X}x + k\varphi + g_{s,m}\delta\right]$

   wobei p eine in 360°periodische, insbesondere eine trigonometrische, Funktion ist,
   wobei a eine reellwertige Konstante ist und
   wobei b eine reellwertige Konstante ist und
   wobei c eine reellwertige Konstante ist.

6. Streifenprojektionsverfahren nach Anspruch 5, **dadurch gekennzeichnet, dass** für den Phasenversatzparameter

**8**

$$|\delta| \le \frac{360°}{N-1}$$ gilt, wobei N = #A gilt und A = {0,1,....., N-1} das Codealphabet des Codes ist.

**7.** Streifenprojektionsvorrichtung zum Bestimmen der Topographie eines Körpers, mit

(i) einem Projektor zum Projizieren einer Folge von Sätzen von Mustern auf die Oberfläche (20) eines Körpers (12),
(ii) einer Kamera (16) zum Aufnehmen eines Bilds (24) der Oberfläche (20) mit aufprojiziertem Muster und
(iii) einer Rechenvorrichtung (18), die mit dem Projektor (14) und der Kamera (16) verbunden ist,
**dadurch gekennzeichnet, dass**
(iv) die Rechenvorrichtung (18) zum automatischen Durchführen eines Verfahrens nach einem der vorstehenden Ansprüche eingerichtet ist.

**8.** Computerprogrammprodukt, das auf einem maschinenlesbaren Medium gespeichert ist und beim Ausführen auf einer Rechenvorrichtung (18)

(i) Ansteuersignale erzeugt, mittels denen eine Streifenprojektionsvorrichtung (10), die

- einen Projektor (14) zum Projizieren einer Folge von Sätzen von Mustern auf die Oberfläche (20) eines Körpers (12) und
- eine Kamera (16) zum Aufnehmen eines Bilds (24) der Oberfläche (20) mit aufprojiziertem Muster aufweist,

so angesteuert wird, dass eine Folge von Bildern (24.i) entsteht, und
(ii) aus der Folge von Bildern (24.i) die Topographie des Körpers (12) berechnet,
(iii) wobei jeder Streifen einen Intensitätsverlauf senkrecht zur Streifen-Längsrichtung (L) aufweist,

jeder Intensitätsverlauf durch eine periodische Funktion (Q) beschreibbar ist, die eine räumliche Frequenz und eine räumliche Phasenlage (ß) hat, wobei alle Intensitätsverläufe die gleiche räumliche Frequenz haben, und
die Phasenlage (ß) sich in Abhängigkeit von einem Code ($g_{(s)}$) der Ordinalzahl des Streifens ändert, wobei die Phasenlage (ß) der Streifen der Muster ($T_i$) eines jeweiligen Satzes (m) von jeweils nur einer einzigen Codewortstelle des Codes ($g_{(s)}$) der Ordinalzahl (s) abhängen.

## Claims

**1.** Fringe projection method for determining the topography of a body (12), comprising the steps of:

(a) projecting a sequence of sets (m) of patterns ($T_i$) onto the surface (20) of the body (12), wherein each set (m) has at least two patterns ($T_i$) and wherein each pattern ($T_i$) has S fringes;
(b) for each pattern ($T_i$), capturing an image (24.i) of the surface (20) having the projected pattern, resulting in a sequence of captured images, and
(c) calculating the topography from the images (24.i),
(d) wherein such patterns ($T_i$) are projected in which each fringe has an intensity distribution that is perpendicular to the fringe longitudinal direction (L) and each intensity distribution can be described by a periodic function (Q) that has a spatial phase position ($\beta$), wherein all intensity distributions have the same spatial frequency, and
(e) the phase position ($\beta$) changes depending on a code ($g_{(s)}$) of the ordinal number (s) of the fringe, wherein the phase positions ($\beta$) of the fringes of the patterns ($T_i$) of each set (m) depend in each case on only a single codeword location of the code ($g_{(s)}$) of the ordinal number (s).

**2.** Fringe projection method according to claim 1, **characterized in that** the phase positions ($\beta$) for all k patterns within a set differ from one another.

**3.** Fringe projection method according to either of the preceding claims, **characterized in that** the phase position ($\beta$) in the s-th fringe of the k-th pattern in the m-th set contains the sum of
a first term that contains s but does not contain k, and
a second term that contains k but not s or m.

4. Fringe projection method according to claim 3, **characterized in that** the phase for the s-th fringe of the k-th pattern in the m-th set contains the term $\frac{360°Sx}{x} + k\varphi + g_{s,m}\delta$, where

   S is the total number of fringes (s = 0, 1, ......, S-1),
   x is the coordinate perpendicular to the fringe longitudinal direction,
   X is the upper interval limit of the x values (x $\in$ {0, ......, X}),
   $\varphi$ is a differential angle where $\varphi$ *mod* 360° $\neq$ 0°,
   $g_{s,m}$ is the m-th digit of the code, in particular the Gray code, g of s and
   $\delta$ is a phase shift parameter where $\delta$ *mod* 360° $\neq$ 0°.

5. Fringe projection method according to claim 4, **characterized in that** the intensity Q at the location x for the s-th fringe of the k-th pattern in the m-th set is given by:

$$Q_{k,s,m}(x)) = a \cdot p \left[\frac{360°S}{X}x + k\varphi + g_{s,m}\delta\right]$$

   where p is a 360°-periodic function, in particular a trigonometric function,
   where a is a real-valued constant and
   where b is a real-valued constant and
   where c is a real-valued constant.

6. Fringe projection method according to claim 5, **characterized in that** $|\delta| \leq \frac{360°}{N-1}$ applies to the phase shift parameter, where N = #A and A = {0, 1, ...... , N-1} is the code alphabet of the code.

7. Fringe projection device for determining the topography of a body, having

   (i) a projector for projecting a sequence of sets of patterns onto the surface (20) of a body (12),
   (ii) a camera (16) for capturing an image (24) of the surface (20) having the projected pattern and
   (iii) a computing device (18) connected to the projector (14) and the camera (16), **characterized in that**
   (iv) the computing device (18) is configured to automatically carry out a method according to any of the preceding claims.

8. Computer program product which is stored on a machine-readable medium and which, when executed on a computing device (18),

   (i) generates control signals by means of which a fringe projection device (10), which comprises

      - a projector (14) for projecting a sequence of sets of patterns onto the surface (20) of a body (12) and
      - a camera (16) for capturing an image (24) of the surface (20) having the projected pattern,

   is controlled such that a sequence of images (24.i) is produced, and
   (ii) calculates the topography of the body (12) from the sequence of images (24.i),
   (iii) wherein each fringe has an intensity distribution perpendicular to the fringe longitudinal direction (L),

   each intensity distribution can be described by a periodic function (Q) which has a spatial frequency and a spatial phase position ($\beta$), wherein all intensity distributions have the same spatial frequency, and the phase position ($\beta$) changes depending on a code ($g_{(s)}$) of the ordinal number of the fringe, wherein the phase position ($\beta$) of the fringes of the patterns ($T_i$) of each set (m) depend in each case on only a single codeword location of the code ($g_{(s)}$) of the ordinal number (s).

**Revendications**

1. Procédé de projection de franges pour déterminer la topographie d'un corps (12), comprenant les étapes :

(a) de projection d'une séquence d'ensembles (m) de motifs (Ti) sur la surface (20) du corps (12), chaque ensemble (m) comprenant au moins deux motifs (Ti) et chaque motif (Ti) ayant des franges S ;

(b) de capture, pour chaque motif (Ti), d'une image (24.i) de la surface (20) présentant le motif projeté, de manière à former une séquence de captures, et

(c) de calcul de la topographie à partir des images (24.i),

(d) de projection desdits motifs (Ti), motifs pour lesquels chaque frange présente une courbe d'intensité perpendiculaire à la direction longitudinale (L) de la frange, et chaque courbe d'intensité peut être décrite par une fonction périodique (Q) ayant une position de phase spatiale (β), toutes les courbes d'intensité ayant la même fréquence spatiale, et

(e) de changement de la position de phase (β) en fonction d'un code ($g_{(s)}$) du nombre ordinal (s) de la frange, les positions de phase (β) des franges des motifs (Ti) d'un ensemble respectif (m) dépendant à chaque fois d'un seul emplacement de mot de code du code ($g_{(s)}$) du nombre ordinal (s).

2. Procédé de projection de franges selon la revendication 1, **caractérisé en ce que** les positions de phase (β) pour tous les motifs k diffèrent les unes des autres au sein d'un ensemble.

3. Procédé de projection de franges selon l'une des revendications précédentes, **caractérisé en ce que**
la position de phase (β), dans la s-ème frange du k-ème motif dans le m-ème ensemble, correspond à la somme
d'un premier terme qui contient s mais ne contient pas k, et
d'un second terme qui contient k, mais pas s ou m.

4. Procédé de projection de franges selon la revendication 3, **caractérisé en ce que** la phase de la s-ème frange du k-ème motif dans le m-ème ensemble correspond au terme

$$\frac{360°Sx}{X} + k\varphi + g_{s,m}\delta \, ,$$

S étant le nombre total de franges (s = 0,1,......, S-1),
x étant la coordonnée perpendiculaire à la direction longitudinale de la frange,
X étant la limite supérieure d'intervalle des valeurs x (x ∈ {0,......, X}),
φ étant un angle de différence avec φ mod 360° ≠ 0°,
$g_{s,m}$ étant le m-ème emplacement du code, en particulier du code Gray, g de s, et
δ étant un paramètre de déphasage avec δ mod 360° ≠ 0°.

5. Procédé de projection de franges selon la revendication 4, **caractérisé en ce que** l'intensité Q à l'emplacement x pour la s-ème frange du k-ème motif dans le m-ème ensemble est donnée par :

$$Q_{k,s,m}(x)) = a \cdot p\left[\frac{360°S}{X}x + k\varphi + g_{s,m}\delta\right]$$

p étant une fonction périodique de 360°, en particulier trigonométrique,
a étant une constante à valeur réelle,
b étant une constante à valeur réelle, et
c étant une constante à valeur réelle.

6. Procédé de projection de franges selon la revendication 5, **caractérisé en ce que**, pour le paramètre de déphasage,
la formule $|\delta| \leq \frac{360°}{N-1}$ s'applique, avec N = #A et A = {0,1,......, N-1} étant l'alphabet de code du code.

7. Dispositif de projection de franges pour déterminer la topographie d'un corps, comprenant

(i) un projecteur pour projeter une séquence d'ensembles de motifs sur la surface (20) d'un corps (12),

(ii) une caméra (16) pour capturer une image (24) de la surface (20) ayant un motif projeté, et

(iii) un dispositif de calcul (18) connecté audit projecteur (14) et à ladite caméra (16),

**caractérisé en ce que**

(iv) ledit dispositif de calcul (18) est agencé pour exécuter automatiquement un procédé selon l'une des revendications précédentes.

8. Produit de programme informatique qui est stocké sur un support lisible par machine et, lorsqu'il est exécuté sur un dispositif de calcul (18),

    (i) génère des signaux d'entraînement au moyen desquels un dispositif de projection de franges (10) qui présente

        - un projecteur (14) pour projeter une séquence d'ensembles de motifs sur la surface (20) d'un corps (12), et
        - une caméra (16) pour capturer une image (24) de la surface (20) présentant un motif projeté, est actionné pour former une séquence d'images (24.i), et

    (ii) calcule la topographie du corps (12) à partir de la séquence d'images (24.i),
    (iii) chaque frange présentant une courbe d'intensité perpendiculaire à la direction longitudinale (L) de la frange,

chaque courbe d'intensité pouvant être décrite par une fonction périodique (Q) ayant une fréquence spatiale et une position de phase spatiale ($\beta$), toutes les courbes d'intensité ayant la même fréquence spatiale, et
la position de phase ($\beta$) changeant en fonction d'un code ($g_{(s)}$) du nombre ordinal de la frange, la position de phase ($\beta$) des franges des motifs (Ti) d'un ensemble (m) respectif dépendant à chaque fois d'un seul emplacement de mot de code du code ($g_{(s)}$) du nombre ordinal (s).

Fig. 1

Codealphabet A={0, 1, ..., N-1}
z.B.: quaternärer Gray-Code: A={0, 1, 2, 3}

$Q_{proi} = Q_{m,k,s}(x) = sin(360°S·x/X + (k=0)·90° + (g_{s,m}=0)·90°)$
$Q_{proi} = Q_{m,k,s}(x) = sin(360°S·x/X + (k=1)·90° + (g_{s,m}=0)·90°)$

$Q_{m,k,s}(x) = sin(360°S·x/X + (k=1)·90° + (g_{s,m}=3)·90°)$

$Q_{m,k,s}(x) = sin(360°S·x/X + (k=1)·90° + (g_{s,m}=1)·90°)$   β

s=15
(S-1). Streifen →
s=0   s=1   s=2
0. Streifen →
X/S

L   y   x

$T_1$   $T_2$   $T_3$   $T_4$

(m=0). Satz mit K Mustern   k=0   k=1
(m=1). Satz mit K Mustern   k=0   k=1
(m=2). Satz mit K Mustern   k=0   k=1

$g_{0,0}$   $g_{1,0}$   $g_{0,1}$   $g_{1,1}$   $g_{0,2}$   $g_{1,2}$

m-ter Satz s-te Streifen entspricht
m-te Stelle von g(s)
dabei ist g(s) der Gray-Code von s

g(s=15)= 0 3 0
g(s=5)= 0 1 2
g(s=4)= 0 1 3
g(s=3)= 0 0 3
g(s=2)= 0 0 2
g(s=1)= 0 0 1
g(s=0)= 0 0 0

M Sätze à jeweils K Mustern

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011008471 A1
- DE 112008002148 T5
- US 6930704 B1
- CN 102322823 A

**In der Beschreibung aufgeführte Nicht-Patentliteratur**

- **SANSONI et al.** 3D Imager for Dimensional Gauging of Industrial Workpieces: State of the Art of the Development of a Robust and Versatile System. *Proceedings of International Conference on Recent Advances in 3-D Digital Imaging and Modeling,* 1997, 19-26
- **SANSONI et al.** Three-dimensional vision based on a combination of gray-code and phase-shift light projection: analysis and compensation of the systematic errors. *Applied Optics,* 1999, vol. 38 (31), 6565-6573
- Novel phase-coding method for absolute phase retrieval. **WANG et al.** OPTICS LETTERS. Optical Society of America, 01. Juni 2012, vol. 37